# EUROPEAN PATENT SPECIFICATION

(11) **EP 2 641 209 B1**
(45) Date of publication and mention of the grant of the patent: **27.09.2017**
(21) Application number: 11840937.4
(22) Date of filing: 10.11.2011
(51) Int. Cl.: H04W 12/06, H04W 88/02, G06F 21/32

(54) **METHOD OF USING DEVICE MOTION IN A PASSWORD**
VERFAHREN ZUR VERWENDUNG EINER VORRICHTUNGSBEWEGUNG IN EINEM PASSWORT
PROCÉDÉ D'UTILISATION DU MOUVEMENT D'UN DISPOSITIF DANS UN MOT DE PASSE

(30) Priority: 16.11.2010 US 947042
(43) Date of publication of application: 25.09.2013
(73) Proprietor: Intel Corporation, Santa Clara, CA 95054 (US)
(72) Inventor: BACA, Jim S., Santa Clara, CA 95054 (US); TAFOYA, Ronald, Sandia Park, New Mexico 87047 (US); BOWEN, Thomas R., Albuquerque, New Mexico 87107 (US)
(74) Representative: Goddar, Heinz J.
(86) International application number: PCT/US2011/060262
(87) International publication number: WO 2012/067948

(56) References cited:
- JP-A- 2002 291 047
- US-A- 5 317 304
- US-A- 6 133 830
- US-A1- 2001 047 488
- US-A1- 2006 017 692
- US-A1- 2008 136 587
- US-A1- 2010 180 336
- US-A1- 2010 225 443

## Description

### FIELD

The present disclosure generally relates to the field of security of mobile computing devices. More particularly, an embodiment of the invention relates to using directional motion information of a mobile computing device as part of user authentication.

### BACKGROUND

Computing devices may become "locked" to deter unauthorized use according to known methods. Passwords are commonly used as a simple mechanism for enabling user authentication. When a computing device is locked, the user enters the password, typically via a keyboard. If the correct password is entered, the computing device is unlocked and available for continued use. Some passwords for some computing devices, such as mobile computing devices (e.g., cell phones), are simple personal identification numbers (PINs). In some devices, the length of the PΓN is only four digits, which provides only minimal security. If the computing device is lost or stolen, it may be possible for an attacker to guess the PIN and thus access the device. Hence, better methods of securing mobile computing devices are needed.

Some computing devices include an accelerometer. Typically, the accelerometer is used to detect orientation of the device resulting in a change of the display orientation (portrait or landscape mode), or to detect a shock condition from a fall. In some devices, sensing by the accelerometer of the user shaking the device may result in an action such as answering an incoming phone call. However, such sensed conditions are crude, often indicating merely conditions such as the tilt/orientation of the device or the presence of shock to the device.

Some computing devices include a touch screen. In some of these devices, a touch gesture on the touch screen may unlock or reactivate the device from a sleep state. One problem with this approach is that the gesture will be entered many times and detection of the gesture can be made by someone who has stolen the device by analyzing the touch screen surface. Again, better methods of securing mobile computing devices are need.

US 2010/0225443 A1 discloses a user authentication approach based on finger touch samples that define a trace of user's signature in order to generate a password. Furthermore, biometric information and a 3D "air signature" captured by accelerometers may be used to supplement the signature information.

US 2010/0180336 A1 discloses an authentication approach using a graphical password. The user is presented with a plurality of graphical images on a display screen of a device and selects graphical images in order to generate a password. The password may be enriched with other data or input to generate a multi-dimensional password, including motion data of the device.

JP 200291047 A discloses a terminal having acceleration sensors to generate acceleration signals, which are compared to a stored password.

US 2001/0047488 A1 discloses a motion password control system, which continuously monitor motions of a device in order to detect unauthorized usage of the device.

### BRIEF DESCRIPTION OF THE DRAWINGS

The detailed description is provided with reference to the accompanying figures. The use of the same reference numbers in different figures indicates similar or identical items.
Figure 1 is an example of a sequence of motions for use in a password for a mobile computing device according to an embodiment of the present invention.
Figure 2 is an example of combining a sequence of motions and additional user inputs for use in a password for a mobile computing device according to an embodiment of the present invention.
Figure 3 is a simplified diagram of a mobile computing device according to an embodiment of the present invention.
Figure 4 is a flow diagram of a password training mode for a mobile computing device according to an embodiment of the present invention.
Figure 5 is a flow diagram of password processing according to an embodiment of the present invention.
Figure 6 illustrate a block diagram of an embodiment of a mobile computing device.

### DETAILED DESCRIPTION

Embodiments of the present invention comprise methods for using directional motion information of a mobile computing device as at least a portion of a password entered by a user in order to be authenticated to use the mobile computing device. In embodiments of the present invention, a mobile computing device may include a cellular telephone, a smart phone, a tablet computing device, a personal digital device, a personal digital assistant, a netbook, a handheld computer, or any other computing device that may be moved. In various embodiments, the mobile computing device may be any small form factor computing device.

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware"), computer-readable instructions organized into one or more programs stored on a computer readable storage medium ("software"), or some combination of hardware and software. For the purposes of this disclosure reference to "logic" shall mean hardware, software (including for example micro-code that controls the operations of a processor), firmware, or some combination thereof.

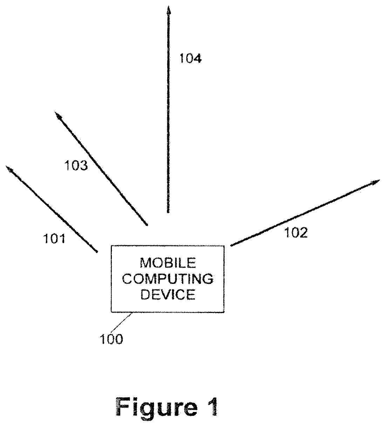

Figure 1 is an example of a sequence of motions for use in a password for a mobile computing device according to an embodiment of the present invention. In an embodiment, a password may include a specific set of motions performed by the user with the mobile computing device. Typically this would involve the user holding the mobile computing device with one or both hands and moving the whole device in a physical gesture in a premeditated and purposeful way. The movement of the mobile computing device in three dimensions may be sensed by an accelerometer within the mobile computing device. The sensed motion may be translated into digital directional motion information. In an embodiment, this directional motion information may comprise at least part of the password. For example, as shown in Figure 1, the user holds mobile computing device 100 and, at the appropriate time, moves the device along vector 101. Vector 101 may be any vector in three dimensional space. In one embodiment, after returning the device to an approximate starting position in three dimensional space, the user then moves the device along vector 102. After returning the device to an approximate starting position in three dimensional space, the user then moves the device along vector 103. Finally, after returning the device to an approximate starting position in three dimensional space, the user then moves the device along vector 102. In this simple example, these four movements become part of the password for the mobile computing device, and unlocking the device requires the user to perform these four movements in sequence at the appropriate time while holding the device.

It is to be understood that this example is merely illustrative and not limiting. The number of movements, whether or not the device is returned to an approximate starting position between movements, the velocity and acceleration of each of the movements, whether the movement is on a two dimensional plane, and whether the movements are discrete or comprise a continuous movement for a period of time (e.g., moving the device in a circle, and so on), are all implementation-dependent considerations. In embodiments of the present invention, any movement of the device in any of the three dimensions that can be sensed by an accelerometer may comprise at least a portion of the password.

In an embodiment, the fourth dimension of time may also be a component of the password. Time may be obtained from a clock within the mobile computing device. In an embodiment, there may be an overall time limit to perform the password motions once commenced. For example, the motions may be required to be concluded within three seconds. Further, in an embodiment, time delays between discrete motions may also be included in the password. For example, the user may delay one second between motions. In embodiments of the present invention, any combination of movements of the device in three dimensions along with time spent moving or not moving the device during those movements may comprise at least a portion of the password.

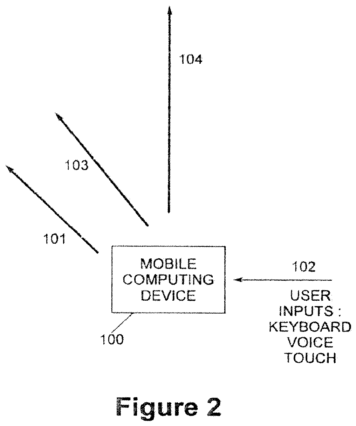

Figure 2 is an example of combining a sequence of motions and additional user inputs for use in a password for a mobile computing device according to an embodiment of the present invention. In this example, the user first moves the device along vector 101. Next, the user makes one or more additional user inputs 102 using conventional user input devices of the mobile computing device. In various embodiments, any user input devices which are part of the mobile computing device may be employed. For example, the user may make one or more keyboard entries using a physical keyboard (hard keys) or virtual keyboard (soft keys) of the device. The user then moves the device along vector 103, and subsequently vector 104. The keyboard entries may be done before, during, or after the device movements. In an embodiment, the combination of the device movements and the one or more keyboard entries comprise the password.

In other embodiments, other user inputs along with directional motion information may comprise at least a portion of the password. In an embodiment, an audio or voice component may comprise a portion of the password. The user may speak an utterance into a microphone of the mobile computing device, which may then be captured and stored as part of the password. In an embodiment, this may be accomplished using known voice recognition techniques. The utterance may be done before, during, or after the device movements. For example, a password may include having the user, when prompted, speak a predetermined word or phrase into the microphone, then move the device in a certain way (or vice versa). In another example, the user may have to move the device a certain way, speak a predetermined word or phrase, and then move the device the same or another way.

In another embodiment, one or more touches on a touch screen of the mobile computing device may comprise a portion of the password along with the directional motion information. For example, the password may include having the user touch the screen a predetermined number of times in one or more predetermined locations before, during, or after movement of the whole device.

In various embodiments, any one or more of keyboard entries, voice utterances, and/or touch screen entries may be included as user inputs into the password along with the motion information. Additionally, in other embodiments, a scanned fingerprint and/or iris may also be included in the password according to known methods of obtaining fingerprint and iris scans.

In an embodiment, the device movement forming at least a portion of the password may comprise tilting the device at least one time in a direction. In another embodiment, the device movement forming at least a portion of the password may comprise a sequence of tilting the device multiple times, with each tilt movement being in any direction.

As can be seen, the combination of conventional user inputs and device movements forming the password according to embodiments of the present invention are limitless. By requiring device movement as at least part of the password, security may be improved.

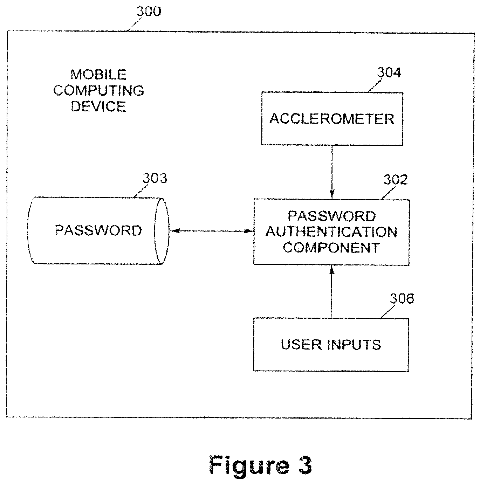

Figure 3 is a simplified diagram of a mobile computing device 300 according to an embodiment of the present invention. Mobile computing device 300 comprises a password authentication component 302. The password authentication component operates to capture and store a password based at least in part on directional motion information of the device generated during a password training phase. The password 303 may be stored in a memory of the device. In an embodiment, the password may be stored in a secure storage which deters tampering. In an embodiment, the password may be stored as a cryptographic hash of the directional motion information, subject to implementation dependent tolerances. In another embodiment, the password may be stored as a cryptographic hash of the directional motion information and the additional user inputs.

An accelerometer is a device that senses proper acceleration, the acceleration experienced relative to freefall. A multi-axis accelerometer detects magnitude and direction of the acceleration as a vector quantity, and may be used to sense orientation, acceleration, vibration shock, and falling. In an embodiment, accelerometer 304 comprises a three axis accelerometer. In an embodiment, accelerometer 304 may be included to sense motion of the device and generate directional motion information, and forward the directional motion information to the password authentication component. Thus, the accelerometer not only detects motion and/or orientation of the device, but direction of movement as well. In an embodiment, the accelerometer generates directional motion information representing the movement of the device in three dimensional space. The password authentication component may combine this directional motion information with timing information from a clock of the mobile computing device.

In an embodiment, the accelerometer may be a single axis accelerometer, and the mobile computing device may further comprise a gyroscope to provide device orientation. In this embodiment, the combination of the movement sensed by the accelerometer and the gyroscope may comprise the directional motion information.

In an embodiment, user inputs 306 may be obtained from user input devices such as a keyboard, microphone, or touch screen. The password authentication component subsequently operates to store current directional motion information and optionally current additional user inputs and compare the current directional motion information and current additional user inputs to the stored password 303. If they match, access may be enabled to the mobile computing device. If they do not match, access may remain disabled.

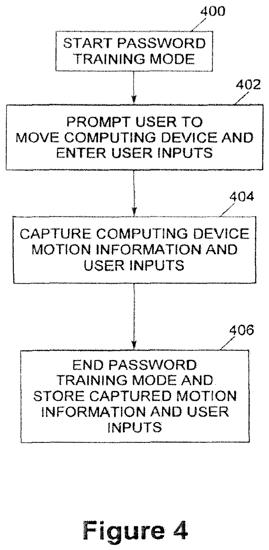

Figure 4 is a flow diagram of a password training mode for a mobile computing device according to an embodiment of the present invention. At block 400, a password training mode may be started as a result of a user input during setup operations for the mobile computing device. At block 402, the mobile computing device may prompt the user (via a user interface) to move the device in a user-defined way. The user interface of the device may instruct the user to remember the movements so that the user can correctly recreate the movements for re-entering the password at a later point in time. In an embodiment, threshold conditions on the directional motion information may be set so that later motions made during a password entry phase approximating the motions made during the password training phase may be determined to match each other. That is, if the motions are within a pre-determined threshold of each other, they will be determined to be a match.

In an embodiment, the user may also be prompted to enter one or more additional user inputs from a keyboard, microphone, touch screen, or other user input device. In an embodiment, these user inputs may be combined with purposeful motion of the device by the user to form the password. At block 404, the mobile computing device captures the directional motion information generated as a result of sensing the user's movement of the device and optionally the additional user inputs in the sequence performed by the user. At block 406, the password training mode is ended and the sequence of captured directional motion information and user inputs may be stored for further use as the user's stored password for the device. In an embodiment, a cryptographic hash operation may be applied to the captured data, and the results of the hash operation stored as the password.

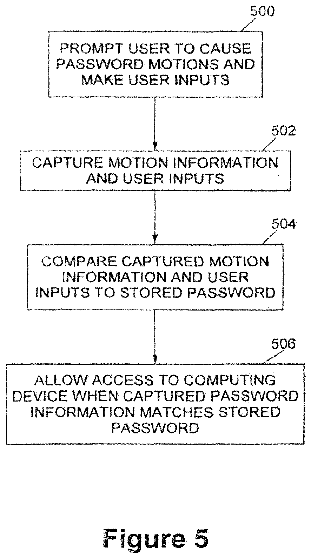

Figure 5 is a flow diagram of password processing according to an embodiment of the present invention. At any time after the password training phase has concluded, the user may desire to enter the user's password into the mobile computing device for any purpose. For example, the password may need to be entered to unlock access to the device or to change device settings. At that time, the user may be prompted at block 500 via a user interface to move the device in such a way as to enter a password to correspond to the stored password. In an embodiment, the prompting may start a period of time for entry of the password by the user. In an embodiment, the starting and ending of password entry operations may be started by the user via a predetermined user input. In an embodiment, the starting of the password entry operations may be started by the user via a predetermined user input, and ended automatically after a predetermined period of time.

In an embodiment, if the user included one or more additional user inputs in the password during the password training phase, the user may be prompted to also enter the one or more additional user inputs (e.g., keyboard entries, voice utterances, and/or touch screen entries). In another embodiment, it may be presumed that the user already knows how and when to make the motions and enter any additional user inputs without being prompted by the device. At block 502, the directional motion information may be captured. In an embodiment, additional user inputs, if any, may also be captured. Timing between motions and/or user inputs may also be part of the password. Clock information may be obtained within the mobile computing device for this purpose. At block 504, the captured motion information and optionally the additional user inputs representing the entered password may be compared to the stored password. If the sequence of captured motion information and the additional user inputs, if any, match the stored password, then access to the mobile computing device features and functions may be allowed.

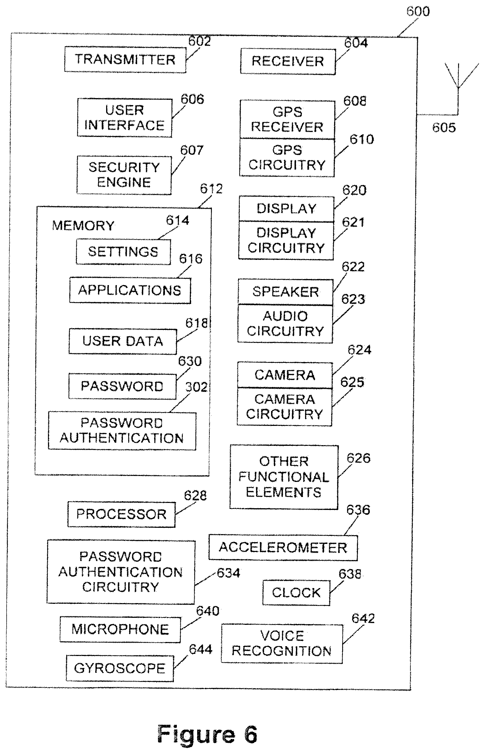

Figure 6 illustrates an embodiment of a mobile computing device. In this illustration, a mobile computing device 600 includes elements for capturing and authenticating a password of the mobile computing device. In some embodiments, a mobile computing device 600 includes one or more transmitters 602 and receivers 604 for transmitting and receiving data. In some embodiments, the mobile computing device includes one or more antennas 605 for the transmission and reception of data, where the antennas may include dipole and monopole antennas. The mobile computing device 600 may further include a user interface 606, including, but not limited to, a graphical user interface (GUI). The mobile computing device 600 may further include one or more elements for the determination of physical location or velocity of motion, including, but limited to, a GPS receiver 608 and GPS circuitry 610.

The mobile computing device 600 may further include one or more memories and/or sets of registers 612, which may include non-volatile memory, such as flash memory, and other types of memory. The memory or registers 612 may include one or more groups of settings 614 for the device, including default settings, user-set settings established by user of the mobile computing device, and enterprise-set settings established by an enterprise, such as an employer, who is responsible for IT (information technology) support. The memory 612 may further include one or more applications 616, including applications that support or control operations of the mobile computing device. The memory 612 may further include user data 618. The memory 612 may further include a password 630 that comprises directional motion information, and optionally additional user inputs. In an embodiment, the memory 612 further includes password authentication component 302 embodied as instructions for execution by processor 628 to compare a stored password 630 to captured directional motion information and optionally additional user inputs.

The mobile computing device may include various additional elements. The mobile device may include a display 620 and display circuitry 621; a speaker 622 and audio circuitry 623 including audible signaling (ringers); a camera 624 and camera circuitry 625 and other functional elements 626. In an embodiment, display 620 may be a touch screen display. A security engine 607 may be provided in some embodiments to provide cryptographic and other security processing for the mobile computing device. In an embodiment, the security engine may provide for protection of the password stored in memory against attempts for unauthorized access to the password.

In an embodiment, the mobile computing device comprises an accelerometer 636 to sense directional motion of the device. The mobile computing device also comprises a clock 638 to obtain current time information. In an embodiment, password authentication component 302 may be implemented as password authentication hardware circuitry 634. In an embodiment, mobile computing device includes a microphone 640 for capturing voice utterances of the user, as well as voice recognition component 642 to process those voice utterances according to know methods. In an embodiment, a gyroscope 644 may also be included in the mobile computing device to provide orientation information.

In various embodiments of the invention, the operations discussed herein, e.g., with reference to Figures 3-5, may be implemented as hardware (e.g., logic circuitry), software (including, for example, micro-code that controls the operations of a processor such as the processor discussed with reference to Figure 6), firmware, or combinations thereof, which may be provided as a computer program product, e.g., including a tangible machine-readable or computer-readable medium having stored thereon instructions (or software procedures) used to program a computing device (e.g., a processor or other logic of a computing device) to perform an operation discussed herein. The machine-readable medium may include a storage device such as those discussed herein.

Reference in the specification to "one embodiment" or "an embodiment" means that a particular feature, structure, or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Additionally, such computer-readable media may be downloaded as a computer program product, wherein the program may be transferred from a remote computer (e.g., a server) to a requesting computer (e.g., a client) by way of data signals, via a communication link (e.g., a bus, a modem, or a network connection).

Thus, although embodiments of the invention have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. A method of processing a password in a mobile computing device comprising:
sensing at least one movement of the mobile computing device by an accelerometer of the mobile computing device in three dimensional space, wherein the at least one movement comprises a sequence of movements by the user of the mobile computing device in three dimensional space;
**characterized by**:
capturing (502) first directional motion information representing the at least one movement as at least a portion of an entered password, the entered password further comprising timing information relating to the sequence of movements and time delays during which the mobile computing device is not moved between discrete motions of the sequence of movements;
comparing (504) the entered password to a password previously stored in the mobile computing device, the stored password comprising second captured directional motion information, second timing information and second time delays during which the mobile computing device is not moved; and
allowing access (506) to the mobile computing device by a user when the entered password matches the stored password.

2. The method of claim 1, further comprising capturing the second captured directional motion information sensed as a result of the user moving the computing mobile device during a password training phase of operation of the mobile computing device and storing the second captured directional motion information as at least a portion of the stored password in a memory of the mobile computing device.

3. The method of claim 1, wherein the stored password comprises at least one keyboard entry by the user in combination with the second captured directional motion information, and further comprising accepting at least one keyboard entry as at least a portion of the entered password, or wherein the stored password comprises at least one voice utterance of the user in combination with the second captured directional motion information, and further comprising accepting at least one voice utterance as at least a portion of the entered password.

4. The method of claim 1, wherein the stored password comprises at least one touch screen input by the user in combination with the second captured directional motion information, and further comprising accepting at least one touch screen input as at least a portion of the entered password.

5. A computer-readable medium comprising one or more instructions that when executed on a processor of a mobile computing device perform one or more operations to process a password by
capturing first directional motion information representing at least one movement of the mobile computing device in response to sensing the at least one movement by an accelerometer of the mobile computing device in three dimensional space, wherein the at least one movement comprises a sequence of movements by the user of the mobile computing device in three dimensional space, the first captured directional motion information comprising at least a portion of an entered password, the entered password further comprising timing information relating to the sequence of movements and time delays during which the mobile computing device is not moved between discrete motions of the sequence of movements;
comparing the entered password to a password previously stored in the mobile computing device, the stored password comprising second captured directional motion information, second timing information and second time delays during which the mobile computing device is not moved; and
allowing access to the mobile computing device by a user when the entered password matches the stored password.

6. The computer-readable medium of claim 5, further comprising instructions to capture the second captured directional motion information sensed as a result of the user moving the computing mobile device during a password training phase of operation of the mobile computing device and to store the second captured directional motion information as at least a portion of the stored password in a memory of the mobile computing device.

7. The computer-readable medium of claim 5, wherein the stored password comprises at least one keyboard entry by the user in combination with the second captured directional motion information, and further comprising instructions to accept at least one keyboard entry as at least a portion of the entered password.

8. The computer-readable medium of claim 5, wherein the stored password comprises at least one voice utterance of the user in combination with the second captured directional motion information, and further comprising instructions to accept at least one voice utterance as at least a portion of the entered password.

9. The computer-readable medium of claim 5, wherein the stored password comprises at least one touch screen input by the user in combination with the second captured directional motion information, and further comprising instructions to accept at least one touch screen input as at least a portion of the entered password.

10. A mobile computing device comprising:
an accelerometer to sense at least one movement of the mobile computing device in three dimensional space, wherein the at least one movement comprises a sequence of movements by the user of the mobile computing device in three dimensional space;
a clock; and
a password authentication component to
capture first directional motion information representing the at least one movement as at least a portion of an entered password, the entered password further comprising timing information relating to the sequence of movements and time delays during which the mobile computing device is not moved between discrete motions of the sequence of movements;
compare the entered password to a password previously stored in the mobile computing device, the stored password comprising second captured directional motion information, second timing information and second time delays during which the mobile computing device is not moved; and
allow access to the mobile computing device by a user when the entered password matches the stored password.

11. The mobile computing device of claim 10, wherein the mobile computing device further comprises a memory, and wherein the password authentication component is to capture the second captured directional motion information sensed as a result of the user moving the computing mobile device during a password training phase of operation of the mobile computing device and to store the second captured directional motion information as at least a portion of the stored password in the memory.

12. The mobile computing device of claim 10, wherein the mobile computing device further comprises one of:
a keyboard, wherein the stored password comprises at least one keyboard entry by the user in combination with the second captured directional motion information, and wherein the password authentication component is to accept at least one keyboard entry as at least a portion of the entered password;
a microphone and a voice recognition component, wherein the stored password comprises at least one voice utterance of the user in combination with the second captured directional motion information, and wherein the password authentication component is to accept at least one voice utterance as at least a portion of the entered password; and
a touch screen display, wherein the stored password comprises at least one touch screen input by the user in combination with the second captured directional motion information, and wherein the password authentication component is to accept at least one touch screen input as at least a portion of the entered password.

## Patentansprüche

1. Verfahren zum Verarbeiten eines Passworts in einer mobilen Rechenvorrichtung, umfassend:
Erkennen mindestens einer Bewegung der mobilen Rechenvorrichtung durch einen Beschleunigungsmesser der mobilen Rechenvorrichtung in einem dreidimensionalen Raum, wobei die mindestens eine Bewegung eine Abfolge von Bewegungen durch den Benutzer der mobilen Rechenvorrichtung im dreidimensionalen Raum umfasst;
**gekennzeichnet durch**:
Erfassen (502) von ersten Bewegungsrichtungsinformationen, die die mindestens eine Bewegung als mindestens einen Teil eines eingegebenen Passworts repräsentieren, wobei das eingegebene Passwort ferner Zeitgebungsinformationen umfasst, die mit der Abfolge von Bewegungen und Zeitverzögerungen, während derer die mobile Rechenvorrichtung zwischen diskreten Bewegungen der Abfolge der Bewegungen nicht bewegt wird, verbunden sind;
Vergleichen (504) des eingegebenen Passworts mit einem vorher in der mobilen Rechenvorrichtung gespeicherten Passwort, wobei das gespeicherte Passwort zweite erfasste Bewegungsrichtungsinformationen, zweite Zeitgebungsinformationen und zweite Zeitverzögerungen, während derer die mobile Rechenvorrichtung nicht bewegt wird, umfasst; und Erlauben eines Zugriffs (506) auf die mobile Rechenvorrichtung durch einen Benutzer, wenn das eingegebene Passwort mit dem gespeicherten Passwort übereinstimmt.

2. Verfahren nach Anspruch 1, ferner ein Erfassen der zweiten erfassten Bewegungsrichtungsinformationen, die als Ergebnis einer Bewegung der mobilen Rechenvorrichtung durch den Benutzer während einer Passwort-Trainingsbetriebsphase der mobilen Rechenvorrichtung erkannt wurden, und ein Speichern der zweiten erfassten Bewegungsrichtungsinformationen als mindestens einen Teil des gespeicherten Passworts in einem Arbeitsspeicher der mobilen Rechenvorrichtung umfassend.

3. Verfahren nach Anspruch 1, wobei das gespeicherte Passwort mindestens eine Tastatureingabe durch den Benutzer in Kombination mit den zweiten erfassten Bewegungsrichtungsinformationen umfasst und ferner ein Akzeptieren mindestens einer Tastatureingabe als mindestens einen Teil des eingegebenen Passworts umfassend, oder wobei das gespeicherte Passwort mindestens eine Sprachäußerung des Benutzers in Kombination mit den zweiten erfassten Bewegungsrichtungsinformationen umfasst und ferner ein Akzeptieren mindestens einer Sprachäußerung als mindestens einen Teil des eingegebenen Passworts umfassend.

4. Verfahren nach Anspruch 1, wobei das gespeicherte Passwort mindestens eine Berührungsbildschirmeingabe durch den Benutzer in Kombination mit den zweiten erfassten Bewegungsrichtungsinformationen umfasst, und ferner ein Akzeptieren mindestens einer Berührungsbildschirmeingabe als mindestens einen Teil des eingegebenen Passworts umfassend.

5. Computerlesbares Medium, das eine oder mehrere Anweisungen umfasst, die bei Ausführung auf einem Prozessor einer mobilen Rechenvorrichtung eine oder mehrere Vorgänge durchführen, um ein Passwort zu verarbeiten, durch:
Erfassen von ersten Bewegungsrichtungsinformationen, die mindestens eine Bewegung der mobilen Rechenvorrichtung repräsentieren, als Reaktion auf ein Erkennen der mindestens einen Bewegung durch einen Beschleunigungsmesser der mobilen Rechenvorrichtung in einem dreidimensionalen Raum, wobei die mindestens eine Bewegung eine Abfolge von Bewegungen durch den Benutzer der mobilen Rechenvorrichtung im dreidimensionalen Raum umfasst, die ersten erfassten Bewegungsrichtungsinformationen mindestens einen Teil eines eingegebenen Passworts umfassen, das eingegebene Passwort ferner Zeitgebungsinformationen umfasst, die mit der Abfolge von Bewegungen und Zeitverzögerungen, während derer die mobile Rechenvorrichtung zwischen diskreten Bewegungen der Abfolge der Bewegungen nicht bewegt wird, verbunden sind;
Vergleichen des eingegebenen Passworts mit einem vorher in der mobilen Rechenvorrichtung gespeicherten Passwort, wobei das gespeicherte Passwort zweite erfasste Bewegungsrichtungsinformationen, zweite Zeitgebungsinformationen und zweite Zeitverzögerungen, während denen die mobile Rechenvorrichtung nicht bewegt wird, umfasst; und
Erlauben eines Zugriffs auf die mobile Rechenvorrichtung durch einen Benutzer, wenn das eingegebene Passwort mit dem gespeicherten Passwort übereinstimmt.

6. Computerlesbares Medium nach Anspruch 5, ferner Anweisungen zum Erfassen der zweiten erfassten Bewegungsrichtungsinformationen, die als Ergebnis einer Bewegung der mobilen Rechenvorrichtung durch den Benutzer während einer Passwort-Trainingsphase erkannt wurden, und zum Speichern der zweiten erfassten Bewegungsrichtungsinformationen als mindestens einen Teil des gespeicherten Passworts in einem Arbeitsspeicher der mobilen Rechenvorrichtung umfassend.

7. Computerlesbares Medium nach Anspruch 5, wobei das gespeicherte Passwort mindestens eine Tastatureingabe durch den Benutzer in Kombination mit den zweiten erfassten Bewegungsrichtungsinformationen umfasst, und ferner Anweisungen zum Akzeptieren mindestens einer Tastatureingabe als mindestens einen Teil des eingegebenen Passworts umfassend.

8. Computerlesbares Medium nach Anspruch 5, wobei das gespeicherte Passwort mindestens eine Sprachäußerung des Benutzers in Kombination mit den zweiten erfassten Bewegungsrichtungsinformationen umfasst, und ferner Anweisungen zum Akzeptieren mindestens einer Sprachäußerung als mindestens einen Teil des eingegebenen Passworts umfassend.

9. Computerlesbares Medium nach Anspruch 5, wobei das gespeicherte Passwort mindestens eine Berührungsbildschirmeingabe durch den Benutzer in Kombination mit den zweiten erfassten Bewegungsrichtungsinformationen umfasst, und ferner Anweisungen zum Akzeptieren mindestens einer Berührungsbildschirmeingabe als mindestens einen Teil des eingegebenen Passworts umfassend.

10. Mobile Rechenvorrichtung, umfassend:
einen Beschleunigungsmesser, um mindestens eine Bewegung der mobilen Rechenvorrichtung in einem dreidimensionalen Raum zu erkennen, wobei die mindestens eine Bewegung eine Abfolge von Bewegungen durch den Benutzer der mobilen Rechenvorrichtung im dreidimensionalen Raum umfasst;
einen Taktgeber; und
eine Passwortauthentifizierungskomponente, um
erste Bewegungsrichtungsinformationen zu erfassen, die die mindestens eine Bewegung als mindestens einen Teil eines eingegebenen Passworts repräsentieren, wobei das eingegebene Passwort ferner Zeitgebungsinformationen umfasst, die mit der Abfolge von Bewegungen und Zeitverzögerungen, während derer die mobile Rechenvorrichtung zwischen diskreten Bewegungen der Abfolge der Bewegungen nicht bewegt wird, verbunden sind;
das eingegebene Passwort mit einem vorher in der mobilen Rechenvorrichtung gespeicherten Passwort zu vergleichen, wobei das gespeicherte Passwort zweite erfasste Bewegungsrichtungsinformationen, zweite Zeitgebungsinformationen und zweite Zeitverzögerungen, während derer die mobile Rechenvorrichtung nicht bewegt wird, umfasst; und
Zugriff auf die mobile Rechenvorrichtung durch einen Benutzer zu erlauben, wenn das eingegebene Passwort mit dem gespeicherten Passwort übereinstimmt.

11. Mobile Rechenvorrichtung nach Anspruch 10, wobei die mobile Rechenvorrichtung ferner einen Arbeitsspeicher umfasst und wobei die Passwortauthentifizierungskomponente zum Erfassen der zweiten erfassten Bewegungsrichtungsinformationen, die als Ergebnis einer Bewegung der mobilen Rechenvorrichtung durch den Benutzer während einer Passwort-Trainingsphase erkannt wurden, und zum Speichern der zweiten erfassten Bewegungsrichtungsinformationen als mindestens einen Teil des gespeicherten Passworts im Arbeitsspeicher dient.

12. Mobile Rechenvorrichtung nach Anspruch 10, wobei die mobile Rechenvorrichtung ferner eines von Folgendem umfasst:
eine Tastatur, wobei das gespeicherte Passwort mindestens eine Tastatureingabe durch den Benutzer in Kombination mit den zweiten erfassten Bewegungsrichtungsinformationen umfasst und wobei die Passwortauthentifizierungskomponente zum Akzeptieren mindestens einer Tastatureingabe als mindestens einen Teil des eingegebenen Passworts dient;
ein Mikrofon und eine Spracherkennungskomponente, wobei das gespeicherte Passwort mindestens eine Sprachäußerung des Benutzers in Kombination mit den zweiten erfassten Bewegungsrichtungsinformationen umfasst und wobei die Passwortauthentifizierungskomponente zum Akzeptieren mindestens einer Sprachäußerung als mindestens einen Teil des eingegebenen Passworts dient; und
einen Berührungsbildschirm, wobei das gespeicherte Passwort mindestens eine Berührungsbildschirmeingabe durch den Benutzer in Kombination mit den zweiten erfassten Bewegungsrichtungsinformationen umfasst und wobei die Passwortauthentifizierungskomponente zum Akzeptieren mindestens einer Berührungsbildschirmeingabe als mindestens einen Teil des eingegebenen Passworts dient.

## Revendications

1. Procédé de traitement d'un mot de passe dans un dispositif informatique mobile consistant :
à détecter au moins un mouvement du dispositif informatique mobile au moyen d'un accéléromètre du dispositif informatique mobile dans un espace à trois dimensions, dans lequel le ou les mouvements comprennent une séquence de mouvements par l'utilisateur du dispositif informatique mobile dans l'espace à trois dimensions ;
**caractérisé en ce qu'**il consiste :
à capturer (502) des premières informations de mouvement directionnel représentant le ou les mouvements en tant qu'au moins une partie d'un mot de passe entré, le mot de passe entré comportant en outre des informations de synchronisation se rapportant à la séquence de mouvements et des décalages de temps pendant lesquels le dispositif informatique mobile n'est pas déplacé entre des mouvements discrets de la séquence de mouvements ;
à comparer (504) le mot de passe entré à un mot de passe stocké au préalable dans le dispositif informatique mobile, le mot de passe stocké comportant des secondes informations de mouvement directionnel capturées, des secondes informations de synchronisation et des seconds décalages de temps pendant lesquels le dispositif informatique mobile n'est pas déplacé ; et
à autoriser un accès (506) au dispositif informatique mobile par un utilisateur lorsque le mot de passe entré correspond au mot de passe stocké.

2. Procédé selon la revendication 1, consistant en outre à capturer les secondes informations de mouvement directionnel capturées détectées après que l'utilisateur a déplacé le dispositif mobile informatique pendant une phase d'opération d'apprentissage de mot de passe du dispositif informatique mobile et à stocker les secondes informations de mouvement directionnel capturées en tant qu'au moins une partie de mot de passe stocké dans une mémoire du dispositif informatique mobile.

3. Procédé selon la revendication 1, dans lequel le mot de passe stocké comprend au moins une entrée de clavier par l'utilisateur en combinaison avec les secondes informations de mouvement directionnel capturées et consistant en outre à accepter au moins une entrée de clavier en tant qu'au moins une partie du mot de passe entré ou dans lequel le mot de passe stocké comprend au moins une déclaration vocale de l'utilisateur en combinaison avec les secondes informations de mouvement directionnel capturées et consistant en outre à accepter au moins une déclaration vocale en tant qu'au moins une partie du mot de passe entré.

4. Procédé selon la revendication 1, dans lequel le mot de passe stocké comprend au moins une entrée d'écran tactile par l'utilisateur en combinaison avec les secondes informations de mouvement directionnel capturées et consistant en outre à accepter au moins une entrée d'écran tactile en tant qu'au moins une partie du mot de passe entré.

5. Support lisible par ordinateur comprenant une ou plusieurs instructions qui, lorsqu'elles sont exécutées sur un processeur d'un dispositif informatique mobile, effectuent une ou plusieurs opérations pour traiter un mot de passe
en capturant des premières informations de mouvement directionnel représentant au moins un mouvement du dispositif informatique mobile à la suite de la détection du ou des mouvements au moyen d'un accéléromètre du dispositif informatique mobile dans un espace à trois dimensions, dans lequel le ou les mouvements comprennent une séquence de mouvements par l'utilisateur du dispositif informatique mobile dans l'espace à trois dimensions, les premières informations de mouvement directionnel capturées comprenant au moins une partie d'un mot de passe entré, le mot de passe entré comportant en outre des informations de synchronisation se rapportant à la séquence de mouvements et des décalages de temps pendant lesquels le dispositif informatique mobile n'est pas déplacé entre des mouvements discrets de la séquence de mouvements ;
en comparant le mot de passe entré à un mot de passe stocké au préalable dans le dispositif informatique mobile, le mot de passe stocké comportant des secondes informations de mouvement directionnel capturées, des secondes informations de synchronisation et des seconds décalages de temps pendant lesquels le dispositif informatique mobile n'est pas déplacé ; et
en autorisant un accès au dispositif informatique mobile par un utilisateur lorsque le mot de passe entré correspond au mot de passe stocké.

6. Support lisible par ordinateur selon la revendication 5, comprenant en outre des instructions pour capturer les secondes informations de mouvement directionnel capturées détectées après que l'utilisateur a déplacé le dispositif mobile informatique pendant une phase d'opération d'apprentissage de mot de passe du dispositif informatique mobile et pour stocker les secondes informations de mouvement directionnel capturées en tant qu'au moins une partie de mot de passe stocké dans une mémoire du dispositif informatique mobile.

7. Support lisible par ordinateur selon la revendication 5, dans lequel le mot de passe stocké comprend au moins une entrée de clavier par l'utilisateur en combinaison avec les secondes informations de mouvement directionnel capturées et comprenant en outre des instructions pour accepter au moins une entrée de clavier en tant qu'au moins une partie du mot de passe entré.

8. Support lisible par ordinateur selon la revendication 5, dans lequel le mot de passe stocké comprend au moins une déclaration vocale de l'utilisateur en combinaison avec les secondes informations de mouvement directionnel capturées et comprenant en outre des instructions pour accepter au moins une déclaration vocale en tant qu'au moins une partie du mot de passe entré.

9. Support lisible par ordinateur selon la revendication 5, dans lequel le mot de passe stocké comprend au moins une entrée d'écran tactile par l'utilisateur en combinaison avec les secondes informations de mouvement directionnel capturées et comprenant en outre des instructions pour accepter au moins une entrée d'écran tactile en tant qu'au moins une partie du mot de passe entré.

10. Dispositif informatique mobile comprenant :
un accéléromètre pour détecter au moins un mouvement du dispositif informatique mobile dans un espace à trois dimensions, dans lequel le ou les mouvements comprennent une séquence de mouvements par l'utilisateur du dispositif informatique mobile dans l'espace à trois dimensions ;
une horloge ; et
un composant d'authentification de mot de passe
pour capturer des premières informations de mouvement directionnel représentant le ou les mouvements en tant qu'au moins une partie d'un mot de passe entré, le mot de passe entré comportant en outre des informations de synchronisation se rapportant à la séquence de mouvements et des décalages de temps pendant lesquels le dispositif informatique mobile n'est pas déplacé entre des mouvements discrets de la séquence de mouvements ;
pour comparer le mot de passe entré à un mot de passe stocké au préalable dans le dispositif informatique mobile, le mot de passe stocké comportant des secondes informations de mouvement directionnel capturées, des secondes informations de synchronisation et des seconds décalages de temps pendant lesquels le dispositif informatique mobile n'est pas déplacé ; et
pour autoriser un accès au dispositif informatique mobile par un utilisateur lorsque le mot de passe entré correspond au mot de passe stocké.

11. Dispositif informatique mobile selon la revendication 10, dans lequel le dispositif informatique mobile comprend en outre une mémoire, et dans lequel le composant d'authentification de mot de passe est destiné à capturer les secondes informations de mouvement directionnel capturées détectées après que l'utilisateur a déplacé le dispositif mobile informatique pendant une phase d'opération d'apprentissage de mot de passe du dispositif informatique mobile et à stocker les secondes informations de mouvement directionnel capturées en tant qu'au moins une partie de mot de passe stocké dans la mémoire.

12. Dispositif informatique mobile selon la revendication 10, dans lequel le dispositif informatique mobile comprend en outre :
soit un clavier, dans lequel le mot de passe stocké comprend au moins une entrée de clavier par l'utilisateur en combinaison avec les secondes informations de mouvement directionnel capturées et dans lequel le composant d'authentification de mot de passe est destiné à accepter au moins une entrée de clavier en tant qu'au moins une partie du mot de passe entré ;
soit un microphone et un composant de reconnaissance vocale, dans lequel le mot de passe stocké comprend au moins une déclaration vocale de l'utilisateur en combinaison avec les secondes informations de mouvement directionnel capturées et dans lequel le composant d'authentification de mot de passe est destiné à accepter au moins une déclaration vocale en tant qu'au moins une partie du mot de passe entré ; ou
soit un dispositif d'affichage d'écran tactile, dans lequel le mot de passe stocké comprend au moins une entrée d'écran tactile par l'utilisateur en combinaison avec les secondes informations de mouvement directionnel capturées et dans lequel le composant d'authentification de mot de passe est destiné à accepter au moins une entrée d'écran tactile en tant qu'au moins une partie du mot de passe entré.
